# EUROPÄISCHE PATENTANMELDUNG

(11) **EP 0 750 246 A1**
(43) Veröffentlichungstag der Anmeldung: **27.12.1996**
(21) Anmeldenummer: 95114872.5
(22) Anmeldetag: 21.09.1995
(51) Int. Cl.: G06F 1/18

(54) **Personalcomputer mit einem Gehäuse und in diesem Gehäuse angeordneten elektronischen Baueinheiten**

(30) Priorität: 22.06.1995 EP 95109680
(71) Anmelder: VOBIS MICROCOMPUTER AG, D-52146 Würselen (DE)
(72) Erfinder: Enders, Gerdrum, D-34119 Kassel (DE); Knierim, Andreas, D-34119 Kassel (DE); Wacholder, Kai, D-34131 Kassel (DE)
(74) Vertreter: Bauer, Wulf, Dr.

(57) **Zusammenfassung**

Bei einem Personalcomputer mit einem Gehäuse (20), das eine Frontplatte (34) und eine Rückwand (24) aufweist, und mit in diesem Gehäuse (20) angeordneten elektronischen Baueinheiten, zu denen zumindest eine Hauptplatine (44), ein Netzteil (42) und ein Laufwerk (46) gehören, ist die Frontplatte (34) mit der Rückwand (24) über Führungsschienenpaare verbunden ist. Diese können aus einer eingezogenen Normalstellung, in der mindestens ein Führungsschienenpaar gegen ein Verschieben blockiert ist, in eine ausgezogene Service- und Montageposition gezogen werden.

## Beschreibung

Die Erfindung bezieht sich auf einen Personalcomputer mit einem Gehäuse, das eine Frontplatte und eine Rückwand aufweist, und mit in diesem Gehäuse angeordneten elektronischen Baueinheiten, zu denen zumindest eine Hauptplatine, ein Netzteil und ein Laufwerk gehören.

Bei Personalcomputern, insbesondere bei sogenannten Tischgehäusen, die auch desktop genannt werden, ist man bestrebt, die äußeren Abmessungen klein zu halten. Insbesondere bei den genannten Tischgehäusen soll der Computer selbst auf einem Schreibtisch möglichst wenig Platz einnehmen, also eine geringe Stellfläche benötigen. Ein kleiner Aufbau führt aber zu Problemen bei der Produktion und beim Service. Je dichter und kompakter die Bauweise ist, um so schwieriger wird der Zugang zu einzelnen Komponenten. Bei Personalcomputern der eingangs genannten Art überdeckt nach der vorherrschenden Bauweise die Hauptplatine größere Bereiche des Bodens des Gehäuses. Oberhalb von ihr befinden sich Laufwerke und teilweise das Netzteil. Ein Austausch des Prozessors ist meist nur möglich, wenn auch die Laufwerke ausgebaut werden. Hierbei ist zu berücksichtigen, daß ausreichend Platz für Laufwerke vorhanden sein muß, sodaß der Personalcomputer bei der Erstausrüstung oder einer späteren Nachrüstung mit einer ausreichenden Anzahl von Laufwerken bestückt werden kann. Schwierig gestaltet sich bei den derzeitigen Personalcomputern auch der Zugang zu Anschlüssen auf der Hauptplatine, zu den Steckanschlüssen der Laufwerke und zu den Steckleisten des Hauptspeichers.

Hier setzt nun die Erfindung ein. Sie hat es sich zur Aufgabe gemacht, den Zugang zu Baueinheiten des Computers, die bei Montage und Wartung, z. B. beim Aufrüsten, ausreichend zugänglich sein müssen, zu erleichtern, sodaß Montage- und Servicezeiten verkürzt werden.

Ausgehend von dem Personalcomputer der eingangs genannten Art wird die Erfindung gelöst durch die Merkmale des Kennzeichenteils des Patentanspruchs 1.

Bei diesem Personalcomputer sind Frontplatte und Rückwand über Führungsschienenpaare verbunden, können also aus einer eingezogenen Normalstellung, die der üblichen Gebrauchsstellung entspricht, in eine ausgezogene Position gebracht werden. Zumindest die eingezogene Normalstellung ist arretierbar, sodaß sich bei normaler Benutzung des Personalcomputers sich nicht selbsttätig oder ungewollt die Rückwand von der Frontplatte entfernen kann. Die Arretierung kann über beliebige Mittel erreicht werden, beispielsweise unmittelbare Arretierung der Führungsschienenpaare gegeneinander, z. B. durch eine' Schranke, der ein Gewinde zugeordnet ist oder durch eine Federraste, oder aber auch durch außerhalb der Führungsschienenpaare vorgesehene Mittel, beispielsweise durch Aufbringen und Verschrauben einer Haube, die Teil des Gehäuses ist und mit der Rückwand sowie der Frontplatte verbunden wird.

In der Service- und Montageposition steht zwischen Frontplatte und Rückwand eine wesentlich größere Fläche zur Verfügung als in der Normalstellung. Bei einfacher Ausbildung der Schienen ist die Flächenvergrößerung etwas kleiner als zwei, wenn die Schienen in der Service- und Montageposition noch miteinander in Eingriff sind. Erlaubt man ein Trennen der Schienen voneinander oder nutzt man mehrfache, ineinander geführte Schienen, so kann die Vergrößerung der Fläche auch größer als zwei sein. Die Hauptplatine, das Netzteil und die Laufwerke werden so angeordnet, daß in der Service- und Montageposition die Hauptplatine von oben frei zugänglich ist, sodaß also Prozessor, Hauptspeicher, der Steckplatz für einen eventuellen Coprozessor, der BIOS-Baustein usw. frei zugänglich sind und ausgetauscht werden können. Im allgemeinen hängt die Hauptplatine mit der Rückwand zusammen indem die Rückwand mit dem Bodenblech, auf dem die Hauptplatine angeordnet ist, verbunden ist während die Laufwerke der Frontwand zugeordnet sind. Beim Auseinanderziehen kommt die Hauptplatine von den Laufwerken frei, während sie sich in der Normalstellung teilweise unterhalb der Laufwerke befindet. Das Netzteil wird dabei so angeordnet, daß es sich nicht oberhalb der Hauptplatine befindet. In einer bevorzugten Ausführung ist das Netzteil schwenkbar oder in Schienen geführt verstellbar angeordnet oder leicht lösbar mit der Rückwand verbunden, sodaß auch der Platz unterhalb des Netzteils für die Hauptplatine verwendet werden kann.

In einer besonders einfachen Ausführung bilden die Seitenwände des Gehäuses die Führungsschienen aus. Hierzu sind die Seitenwände entsprechend abgewinkelt und formmäßig so aufeinander abgestimmt, daß die Schienenfunktion erreicht wird.

Üblicherweise sind zwei Führungsschienenpaare vorgesehen. Diese müssen nicht für sich allein allseitige Führung gewährleisten, vielmehr können sie zusammenwirken und gemeinsam die Führung ausbilden. Erreicht werden soll, daß die Rückwand wie eine Schublade gegenüber der Frontplatte weggezogen werden kann. Hierzu genügt es, wenn in den Seitenwänden des Gehäuses nach außen (oder nach innen) gerichtete Sicken bzw. Rillen ausgeprägt sind, die quer zur Rückwand bzw. zur Frontplatte verlaufen, wobei der mit der Rückwand verbundene Seitenwandteil den zugehörigen, mit der Frontplatte zusammenhängenden Seitenwandteil übergreift oder von ihm übergriffen wird. Die Richtung, in der dieser Übergriff stattfindet, liegt dabei auf einer Verbindungslinie der beiden Führungsschienenpaare und ist einander zugewandt oder abgewandt.

Die Führungsschienenpaare können auch durch Stangen realisiert sein, beispielsweise können zwei Stangen mit der Rückwand verbunden sein, über die Hohlprofile greifen, die mit der Frontplatte verbunden sind und die die Stangen führend in sich aufnehmen.

In bevorzugter Weiterbildung sind die Laufwerke zu einer Funktionsgruppe mechanisch zusammengefaßt. Diese Funktionsgruppe wird zunächst vormontiert und anschließend an der Frontplatte befestigt.

Vorzugsweise hat das Gehäuse eine Haube, die die Oberwand und die Seitenwände ausbildet. Durch Aufsetzen der Haube wird der in seiner eingezogenen Normalstellung befindliche Teil des Gehäuses, der die Bodenwand, die Frontplatte und die Rückwand aufweist, komplett abgeschlossen.

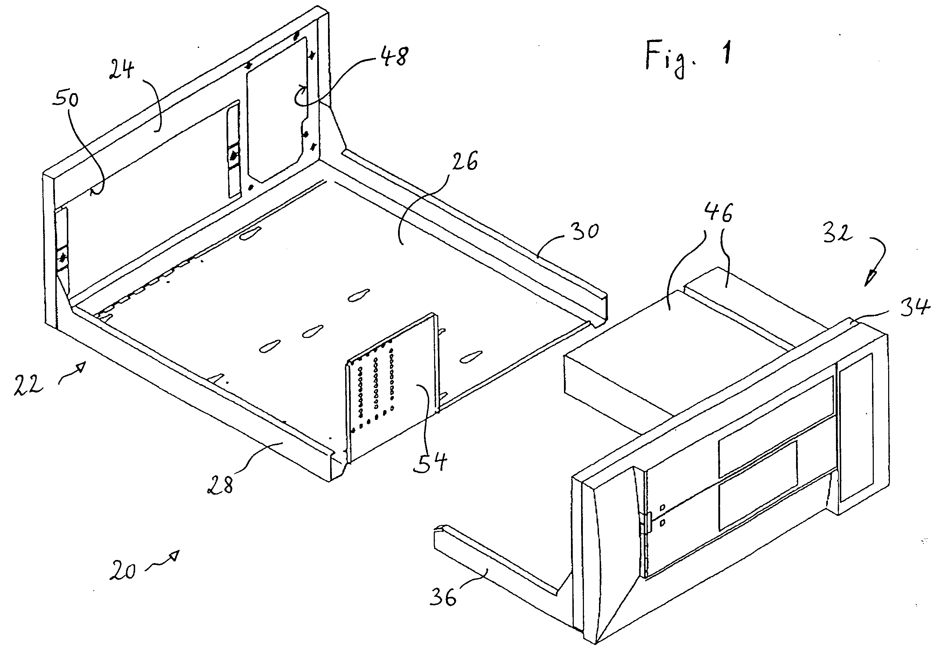

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung näher erläutert werden. In dieser zeigen:
FIG. 1
   eine perspektivische Darstellung eines Gehäuses (20) eines Personalcomputers ohne Haube und mit Laufwerken (46) in der ausgezogenen Service- und Montageposition,
FIG. 2
   der Personalcomputer gem. FIG. 1 in einem Zwischenzustand zwischen ausgezogener Service- und Montageposition und eingezogener Normalstellung,
FIG. 3
   der Personalcomputer nach den vorangegangenen Figuren in der eingezogenen Normalstellung, und
FIG. 4
   perspektivische Teilansicht eines Computers mit Blick auf die Innenseite der Rückwand der Darstellung eines hochschiebbaren Netzteils (42).

Wie aus den Figuren 1 bis 3 ersichtlich ist, hat der Personalcomputer ein Gehäuse 20. Es besteht im wesentlichen aus drei Gehäuseteilen, nämlich
erstens einem rückwärtigem Teil 22, das eine Rückwand (24) 24, ein Bodenblech 26 und linke und rechte Seitenwandteile 28, 30 ausbildet;
zweitens einem frontseitigem Gehäuseteil 32, das eine Frontplatte 34 und ein linkes sowie ein rechtes Seitenwandteil 36, 38 aufweist sowie
drittens einer an sich bekannten Haube (40) 40, die die freien Seitenwandflächen abschließt sowie die Oberseite des Gehäuses 20 bildet.

Insgesamt ist das so ausgeführte Gehäuse im montierten Zustand allseitig geschlossen.

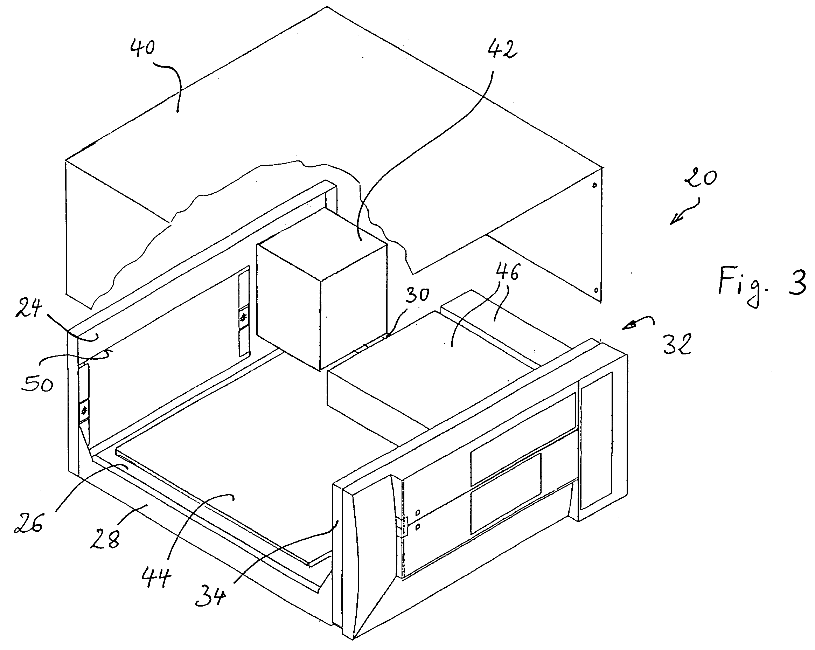

Zum montierten Zustand gehört, daß elektronische Baueinheiten sich innerhalb des Gehäuses 20 befinden, zu diesen gehören ein Netzteil 42, eine Hauptplatine 44, und mindestens ein Laufwerk 46, das als Laufwerk mit austauschbarem Datenträger oder mit nicht austauschbarem Datenträger ausgeführt sein kann. Für die Aufnahme des Netzteils hat die Rückwand 24 in ansich bekannter Weise ein Fenster 48, dieses ist verschlossen, wenn das Netzteil montiert ist (siehe FIG. 3). Weiterhin hat die Rückwand eine Ausnehmung 50, in die ein an sich bekannter Schlitzrahmen für die Aufnahme der Flansche der Steckkarten eingesetzt werden kann, in der Ausführung nach in Figuren 1 bis 3 kann ein flacher Schlitzrahmen von oben eingeschoben werden.

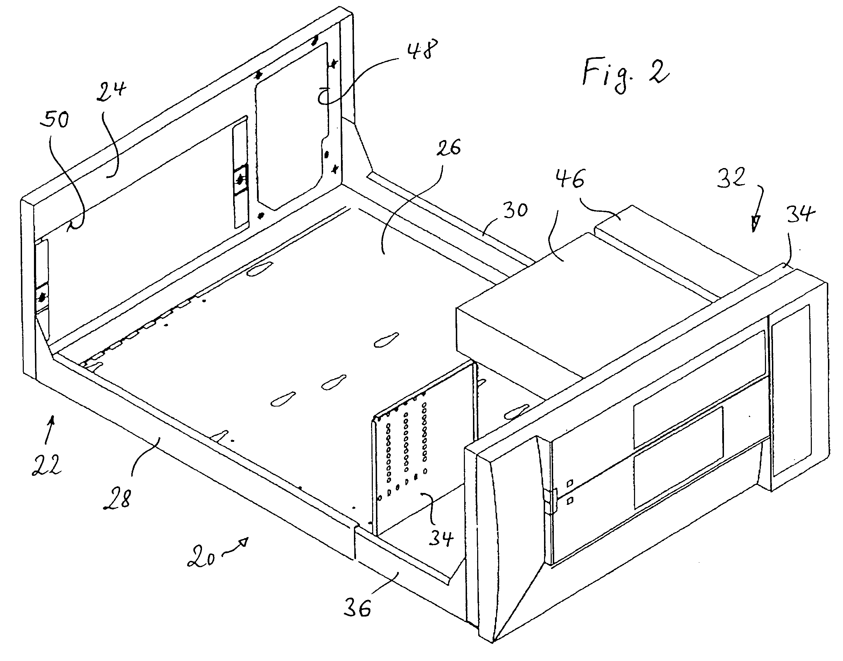

Wie insbesondere aus den Figuren 1 und 2 hervorgeht, bilden die Seitenwandteile 36, 38 und 28, 30 Führungsschienen aus, die jeweils gemeinsam zusammenwirken und jeweils ein Führungsschienenpaar 28, 36 bzw. 30, 38 bilden. FIG. 1 zeigt, daß die Seitenwandteile 28, 30 einstückig mit dem Bodenblech 26 zusammenhängen, ausgehend von dem ebenen Bodenblech erfolgt zunächst eine Abkröpfung nach unten, wodurch erreicht wird, daß das Bodenblech einen Abstand von mehreren Millimetern von einer ebenen Unterlage, auf die das Gehäuse 20 aufgestellt ist, z. B. einem Tisch frei ist, weiterhin sind noch einmal zwei rechtwinklige Abwinklungen so ausgeführt, daß ein C-Profil gebildet wird, das zur Innenseite des Gehäuses hin offen ist. Insgesamt wird also ein Profil ausgebildet, das etwa G-förmig ist.

Die Seitenwandteile 36, 38 des frontseitigen Gehäuseteils 32 springen rechtwinklig nach hinten von der Frontplatte 34 vor und können maximal eine Länge haben, die der freien Länge der Seitenwandteile 36, 38 entspricht, im gezeigten Ausführungsbeispiel ist die freie Länge der Seitenwandteile 36, 38 nur etwa die Hälfte dieses zulässigen Maßes. Dies liegt daran, daß das gezeigte Ausführungsbeispiel nach den Figuren 1 bis 3 so ausgeführt ist, daß in der ausgezogenen Service- und Montageposition die beschriebenen Schienen nicht mehr im Eingriff miteinander sind, wie klar aus FIG. 1 hervorgeht. Es ist in einer anderen Ausführung, die dann der FIG. 2 ähnelt, auch möglich, daß in der ausgezogenen Service- und Montageposition die Schienen im Eingriff miteinander bleiben, so daß es nicht gelingt, den Zustand nach FIG. 1 herzustellen. Dies hat den Vorteil, daß Kabelverbindungen nicht übermäßig mechanisch belastet werden können.

Wie aus FIG. 1 ersichtlich ist, haben die freien Enden der Seitenwandteile 36, 38 Abschrägungen, die ein Einfädeln in die Schienenprofile, die von den Seitenwandteilen 28, 30 ausgebildet werden, erleichtern. Die Profile der Seitenwandteile 26, 38 sind so ausgeführt, daß sie innerhalb des Profilqerschnittes der von den Seitenwandteilen 28, 30 ausgebildeten Profile geführt werden. Zur Erleichterung des Gleitvorganges können die einander zugewandten Oberflächen beschichtet sein, im allgemeinen kann man aber auf eine derartige Gleitbeschichtung verzichten. Die Seitenwandteile 36, 38 können ein Kastenprofil aufweisen, bevorzugt wird aber ein C-förmiges Profil ähnlich demjenigen der Seitenwandteile 28, 30, wobei wiederum die Profilöffnung nach innen gerichtet ist.

Wie aus den Figuren 1 und 2 noch ersichtlich ist, springt vom Bodenblech 26 an dessen freier Vorderkante parallel zur Rückwand 24 und in gleicher Richtung wie diese ein Halteblech 54 vor, das in der eingezogenen Normalstellung, wie sie FIG. 3 zeigt, sich in unmittelbarer Nähe der Rückfläche der Frontplatte 34 befindet. An ihm können Anzeigeleuchten usw. angeordnet sein, die der Frontplatte zugeordnet sind.

Wie sich insbesondere aus FIG. 1 ersehen läßt, bilden das rückwärtige Gehäuseteil 22 und das frontseitige Gehäuseteil 32 gemeinsam das Gehäuseteil, was nach dem Stand der Technik bisher zusammenhängend ausgebildet war und in fester, vorgegebener Entfernung voneinander Rückwand 24 und Frontplatte 34 aufweist. Durch die Trennung in zwei Gehäuseteile 22, 32 ist es möglich, das Bodenblech von oben weitgehend zugänglich zu machen. Wie aus den Figuren 1 bis 3 ersichtlich ist, sind die Laufwerke 46, von denen mehrere vorgesehen sind, der Frontplatte 34 zugeordnet. In der eingezogenen Normalstellung, wie sie FIG. 3 zeigt, überdecken die Laufwerke 46 einen größeren Teilbereich des Bodenblechs und damit auch der Hauptplatine 44, siehe FIG. 3. Bereits in der Zwischenstellung, wie sie FIG. 2 zeigt, sind aber die Laufwerke 46 so weit nach vorn gezogen, daß der Platz oberhalb des Bodenblechs 26, der bisher von ihnen überdeckt wurde frei ist.

Durch die Aufteilung in ein rückwärtiges Gehäuseteil 22, dem Netzteil, Hauptplatine und Steckkarten zugeordnet sind, sowie in ein frontseitiges Gehäuseteil 32, dem die Laufwerke 46 zugeordnet sind, wird also der Zugang zum Bodenblech 26 und damit zur Hauptplatine 44 entscheidend verbessert. Dadurch wird die Montage erleichtert, es wir aber auch stark vereinfacht, den Computer nachzurüsten, und zwar sowohl hinsichtlich einer Nachrüstung von Laufwerken 46 bzw. deren Austausch als auch Nachrüstungen im Bereich der Hauptplatine 44.

Die Schienen können beliebig ausgebildet sein. Die gezeigte Ausführung ist lediglich eine einfache Ausführung, die sich aus Blech einfach realisieren läßt. Es sind lediglich Abbiegungen, also Prägungen notwendig. Andere Ausbildungen der Führungsschienen 28, 36 und 30, 38 sind möglich. Beispielsweise können Führungen verwendet werden, wie sie für Schubladen kommerziell erhältlich sind. Weiterhin können Stangenführungen eingesetzt werden, beispielsweise können die Seitenwandteile 36, 38 durch Rundstangen gebildet werden, die geschlossene oder teilweise offene Hohlprofile eingeführt werden, welche die Seitenwandteile 28, 30 ausbilden.

In den gezeigten Ausführungsbeispielen befinden sich die Seitenwandteile 28, 30 und 36, 38 in unmittelbarer Nähe des Bodenblechs 26. Es ist auch möglich, sie an anderer Stelle anzuordnen, beispielsweise in den oberen Ecken von Rückwand 24 bzw. Frontplatte 34.

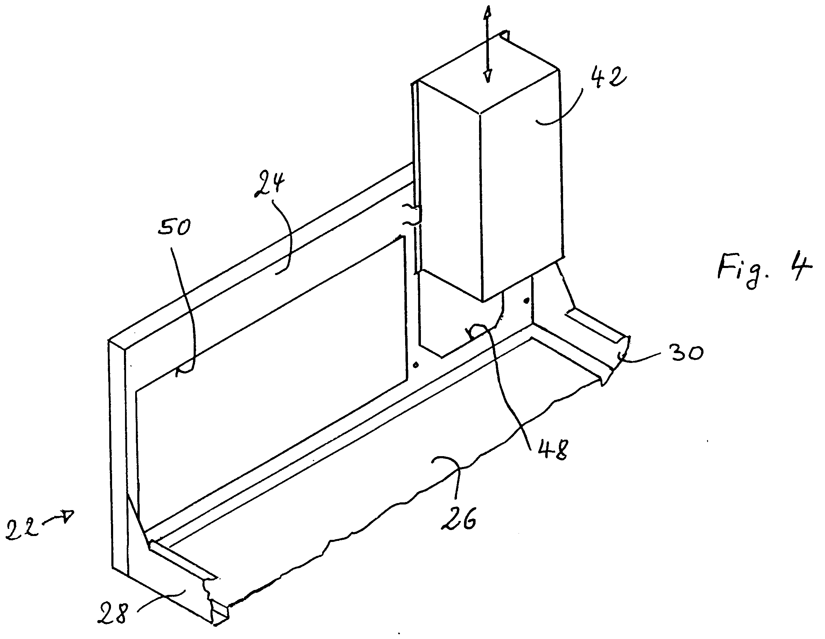

FIG. 4 zeigt noch eine Ausbildung, bei der auch der Platz oberhalb des Bodenblechs 26, der durch das Netzteil 42 überdeckt wird, freigegeben wird. Hierzu sind Teilbereiche, die die Begrenzung des Fensters 48 bilden, nach innen abgekröpft, sie bilden dadurch Führungslaschen 56. Ihr lichter Abstand von der Innenfläche von der Rückwand entspricht einer Blechstärke, nämlich der Blechstärke der Rückwand des Gehäuses des Netzteils 42. Diese Vorsprünge sind seitlich überstehende Bereiche, die zwischen der Innenfläche der Rückwand 24 und den beschriebenen Führungslaschen 56 gehalten werden, wenn das Netzteil 46, wie FIG. 4 zeigt, von oben eingeschoben wird. Vorraussetzung für diese Konstruktion ist, daß die Stecker, Buchsen usw. an der Rückwand des Netzteils 42 nicht über diese hinaus springen.

Ist dies der Fall, so können die Führungslaschen 56 auch nach außen vorspringen, dann jedoch muß das Fenster 48 nach oben offen sein, also ein Ausschnitt sein.

Durch Hochziehen des Netzteils 42, wie es in FIG. 4 in einer Momentanposition gezeigt ist, wird der Platz unterhalb des Netzteils zugänglich. Sowohl in der ausgezogenen Service- und Montageposition, als auch bei hochgezogenem Netzteil, ist der Computer vollständig funktionsfähig. Die Verbindungsleitungen sind so ausreichend lang , daß die beschriebenen Teile voneinander entfernt werden können, ohne daß die elektrische Verbindung verloren geht.

Das Netzteil 42 kann auch in anderer Weise beweglich mit der Rückwand 24 verbunden sein, beispielsweise durch ein Scharnier, durch eine Klemmlasche oder dergleichen. Vorteilhaft ist, wenn das Netzteil 42 in seiner ausgeschwenkten bzw. hochgezogenen Position fixiert werden kann, beispielsweise ein Loch in der Rückwand des Netzteils 42 mit einer Gewindebohrung übereinstimmt, die die Fixierung in der Position, wie sie FIG. 4 zeigt, ermöglicht. Im normalen, heruntergeschobenen Zustand des Netzteils 42 wird dieselbe Gewindebohrung dann für die Befestigung benutzt, ein anderes Loch im Gehäuse des Netzteils 42 fluchtet dann mit ihr.

## Patentansprüche

1. Personalcomputer mit einem Gehäuse (20), das eine Frontplatte (34) und eine Rückwand (24) aufweist, und mit in diesem Gehäuse (20) angeordneten elektronischen Baueinheiten, zu denen zumindest eine Hauptplatine (44), ein Netzteil (42) und ein Laufwerk (46) gehören,
**dadurch gekennzeichnet**, und daß die Frontplatte (34) mit der Rückwand (24) über Führungsschienenpaare verbunden ist, daß diese aus einer eingezogenen Normalstellung, in der mindestens ein Führungsschienenpaar gegen ein Verschieben blockiert ist, in eine ausgezogene Service- und Montageposition gezogen werden können.

2. Personalcomputer nach Anspruch 1, dadurch gekennzeichnet, daß in der Service- und Montageposition die Führungsschienen der Führungsschienenpaare in Eingriff miteinander sind.

3. Personalcomputer nach Anspruch 1, dadurch gekennzeichnet, daß in der Service- und Montageposition die Führungsschienen der Führungsschienenpaare voneinander getrennt sind.

4. Personalcomputer nach einem der Ansprüche 1 bis 3 mit einem Gehäuse (20), das Seitenwände aufweist, dadurch gekennzeichnet, dar jeder Seitenwand Führungsschienen zugeordnet sind.

5. Personalcomputer nach Anspruch 4, dadurch gekennzeichnet, daß der Frontplatte (34) und der Rückwand (24) je ein linkes und ein rechtes Seitenwandteil (28, 30) zugeordnet sind und daß in jedem der insgesamt vier Seitenwandteile (28, 30) eine Führungsschiene ausgebildet ist, wobei die Führungsschienen zweier zusammengehörender Seitenwandteile(28, 30) jeweils ein Führungsschienenpaar bilden.

6. Personalcomputer nach Anspruch 5, dadurch gekennzeichnet, daß jedes Seitenwandteil (28, 30) einstückig eine Führungsschiene ausbildet.

7. Personalcomputer nach einem der Ansprüche 1 bis 5, bei dem das Gehäuse (20) ein Bodenblech (26) aufweist, dadurch gekennzeichnet, daß das Bodenblech (26) mit der Rückwand (24) verbunden ist.

8. Personalcomputer nach einem der Ansprüche 1 bis 7, dadurch gekennzeichnet, daß die Führungsschienenpaare im rechten Winkel zur Frontplatte (34) verlaufen.

9. Personalcomputer nach einem der Ansprüche 1 bis 8, dadurch gekennzeichnet, daß zwei Führungsschienenpaare vorgesehen.

10. Personalcomputer nach Anspruch 3, dadurch gekennzeichnet, daß die Führungsschienen an ihren freien Enden sich verjüngen, insbesondere spitz oder gerundet auslaufen.
